# EUROPEAN PATENT APPLICATION

(11) **EP 2 562 028 A1**
(43) Date of publication of application: **27.02.2013**
(21) Application number: 10850017.4
(22) Date of filing: 24.05.2010
(51) Int. Cl.: B60L 11/18, B60K 7/00, B60K 1/02, B62D 65/12, B60G 3/00, B62D 3/00, B60K 17/24

(54) **REAR-MOUNTED AND REAR-DRIVE CHASSIS FOR ULTRA-MICRO LOW-SPEED PURE ELECTRIC PASSENGER CAR**

(30) Priority: 19.04.2010 CN 201020163943 U
(71) Applicant: Bao, Wenguang, Economic Development Zone Huangyan Taizhou Zhejiang 318020 (CN)
(72) Inventor: BAO, Wenguang, Taizhou Zhejiang 318020 (CN)
(74) Representative: Rutz, Andrea
(86) International application number: PCT/CN2010/000732
(87) International publication number: WO 2011/130883

(57) **Abstract**

A rear-mounted and rear-drive chassis for an ultra-micro low-speed pure electric passenger car pertains to the technical field of a chassis for an electric vehicle, and includes a frame body (1), a front axle and a rear axle both of which are disposed on the frame body (1). It is characterized in that: front wheels are provided at both ends of said front axle; said rear axle is a drive axle; two motors are symmetrically disposed on the rear axle, one ends of which are connected, and the other ends of which are respectively provided with a transmission; the output end of the transmission drives and connects rear wheels. The present invention has a compact structure, a reasonable design and advantageous effects as follows: 1) novel front and rear suspension designs, both using the designs of simplified linkages and lightweight parts; 2) a lightweight braking system, the parts of which mostly use lightweight materials and small-size designs; 3) a lightweight chassis platform. The weight of the whole chassis system is controlled to be under 150 kg, thus providing a common chassis platform for the development of the ultra-micro pure electric passenger car; 4) motors are symmetrically disposed on the real axle, thus obtaining a short drive line, high efficiency and strong power.

## Description

### FIELD OF THE INVENTION

The present application relates to the technical field of a chassis for an electric vehicle, and in particular to a rear-motor rear-drive chassis for an ultra-mini low-speed pure electric vehicle.

### BACKGROUND OF THE INVENTION

It is discovered from research that the existing chassis of electric vehicles in our country are all modified from chassis of golf cars or conventional fuel vehicles. The lightest chassis platform is the "ALTO" chassis, the curb weight of which is 645kg, and this weight far exceeds the weight required for an ultra-mini pure electric vehicle. Electric vehicles employing such chassis may have disadvantages of short range, poor power performance, poor handling stability and running performance and etc.. Thus, a lightweight chassis with good performance will greatly promote the development of the ultra-mini pure electric vehicle.

### SUMMARY OF THE INVENTION

In view of the problems in the prior art, an object of the present application is to provide a technical solution of a lightweight chassis for an ultra-mini low-speed pure electric vehicle, so that the electric vehicle employing the chassis may have advantages of long range, good power performance, good handling stability and good running performance and etc..

A rear-motor rear-drive chassis for an ultra-mini low-speed pure electric vehicle according to the present application includes a frame body, and a front axle and a rear axle being arranged on the frame body, wherein both ends of the front axle are provided with a front wheel, the rear axle is a driving axle and is provided with two motors arranged symmetrically, each of the two motors has one end connected to each other and the other end provided with a transmission, and an output end of the transmission is drivably connected to a rear wheel.

In the rear-motor rear-drive chassis for an ultra-mini low-speed pure electric vehicle, the front axle includes a steering box fixedly connected to a knuckle arm of a steering knuckle via a taper pin, the steering knuckle has an upper end insertedly connected with a front strut assembly and a lower end fixedly connected to a lower swing arm via a taper pin, the lower swing arm is of an A-shaped structure and is connected to the frame body, an outer side of the steering knuckle is connected to a front rim connecting flange via a front hub bearing, and the front rim connecting flange is fixedly connected with a brake disc.

In the rear-motor rear-drive chassis for an ultra-mini low-speed pure electric vehicle, an output shaft of the transmission is connected to an inner end of a half shaft via a spline, an outer end of the half shaft is connected to a rear rim connecting flange via a spline, and the rear rim connecting flange is fixedly provided with a rear brake disc and is mounted with a rim and a rear wheel.

In the rear-motor rear-drive chassis for an ultra-mini low-speed pure electric vehicle, an output end of the steering box is connected to a steering drive shaft and a steering column in sequence via spines, an upper end of the steering column is provided with a combined switch and a steering wheel, and the steering column and the steering box are connected to the frame body via fastening bolts.

In the rear-motor rear-drive chassis for an ultra-mini low-speed pure electric vehicle, the front strut assembly has an upper end connected to the frame body and a lower end insertedly connected to the steering knuckle and fixed via a fastening bolt.

In the rear-motor rear-drive chassis for an ultra-mini low-speed pure electric vehicle, the steering knuckle is made of aluminum alloy material.

In the rear-motor rear-drive chassis for an ultra-mini low-speed pure electric vehicle, outside the half shaft, a shaft sleeve is surroundingly provided, an inner side of the shaft sleeve is fixedly connected to a transmission end cover arranged at an outer side of the transmission, an outer side of the shaft sleeve is fixedly connected to a shaft sleeve outer flange, and the shaft sleeve outer flange is fixedly provided with a rear brake caliper.

In the rear-motor rear-drive chassis for an ultra-mini low-speed pure electric vehicle, the shaft sleeve is provided with a transverse thrust rod support, being connected to a transverse thrust rod via a bolt, a rear shock absorption support, being connected to a rear strut assembly via a bolt, and a longitudinal swing arm support, being connected to a longitudinal swing arm via a bolt.

In the rear-motor rear-drive chassis for an ultra-mini low-speed pure electric vehicle, one end of the transverse thrust rod is connected to the transverse thrust rod support, one end of the rear strut assembly is connected to the rear shock absorption support, one end of the longitudinal swing arm is connected to the longitudinal swing arm support, and the other end of each of the transverse thrust rod, the rear strut assembly and the longitudinal swing arm is connected to the frame body via bolts.

In the rear-motor rear-drive chassis for an ultra-mini low-speed pure electric vehicle, the longitudinal swing arm is made of aluminum alloy material.

The above rear-motor rear-drive chassis for an ultra-mini low-speed pure electric vehicle has a compact structure and a reasonable design, and has the following beneficial effects. 1. Novel front and rear suspension designs are provided, both of which employ simplified linkages and lightweight parts. 2. A lightweight braking system is provided, and parts of which are mostly designed with lightweight materials and small-size. 3. A lightweight chassis platform is provided, and the weight of the whole chassis system is controlled to be under 150 kg, thereby providing a common chassis platform for the development of the ultra-mini pure electric passenger car. 4. Motors are symmetrically disposed on the real axle, thereby achieving a short transmission line, a high efficiency and a good power performance.

### BRIEF DESCRIPTION OF THE DRAWINGS

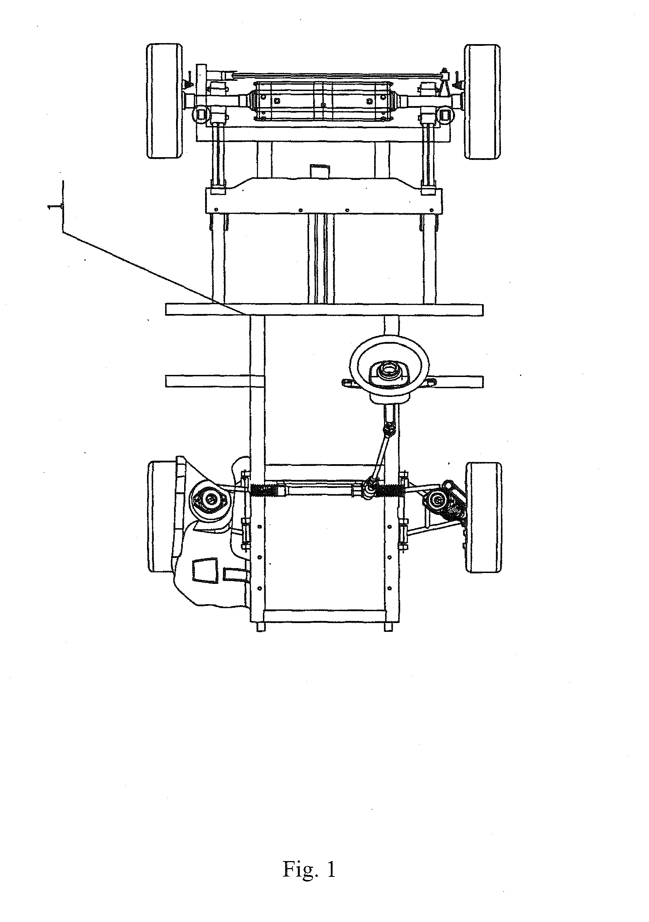

Figure 1 is a structural schematic view of the present application;

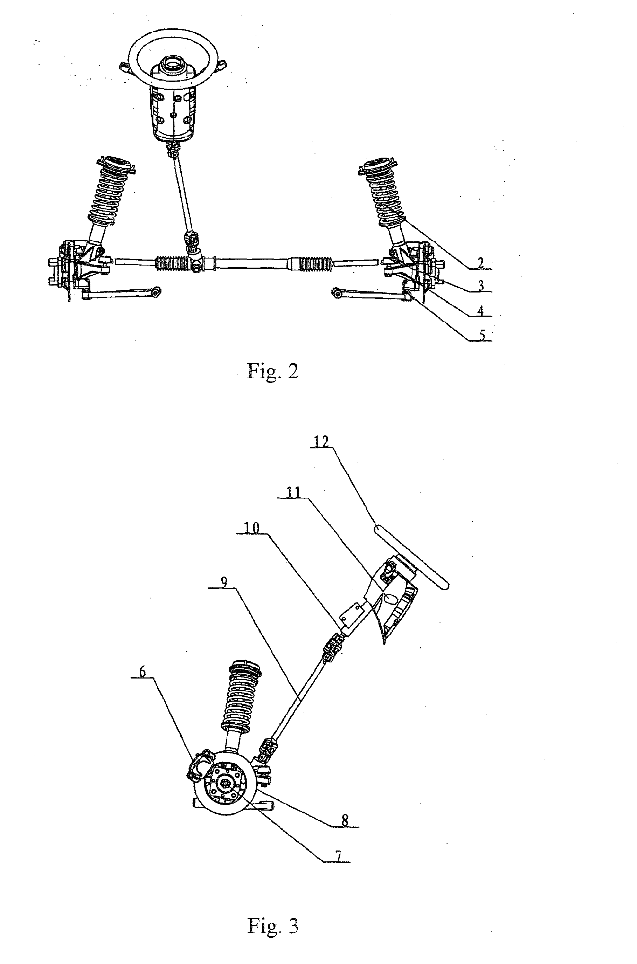

Figure 2 is a structural schematic view of a front axle according to the present application;

Figure 3 is a side view of Figure 2;

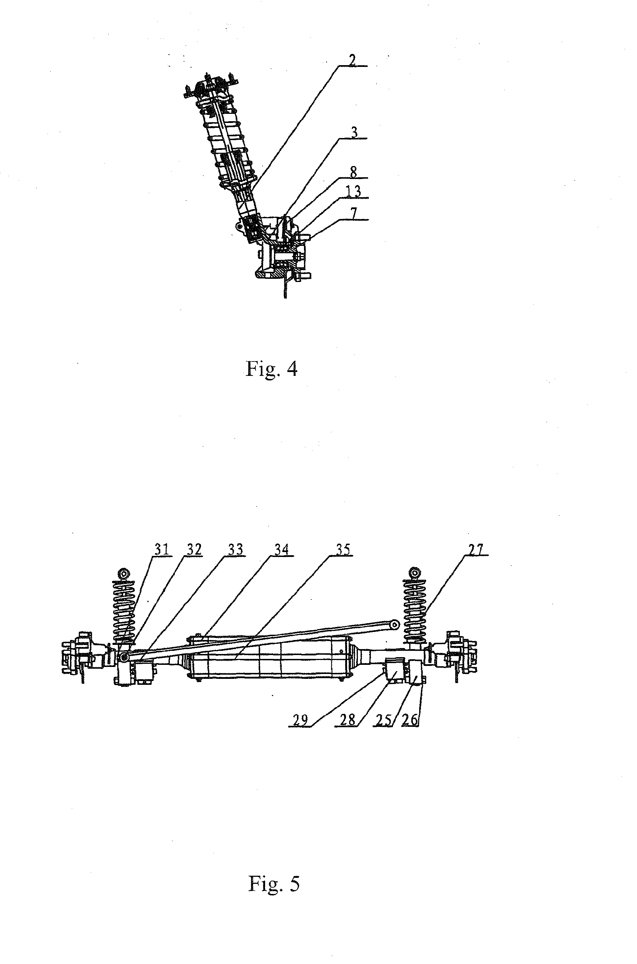

Figure 4 is a partial sectional view of Figure 3;

Figure 5 is a structural schematic view of a rear axle according to the present application;

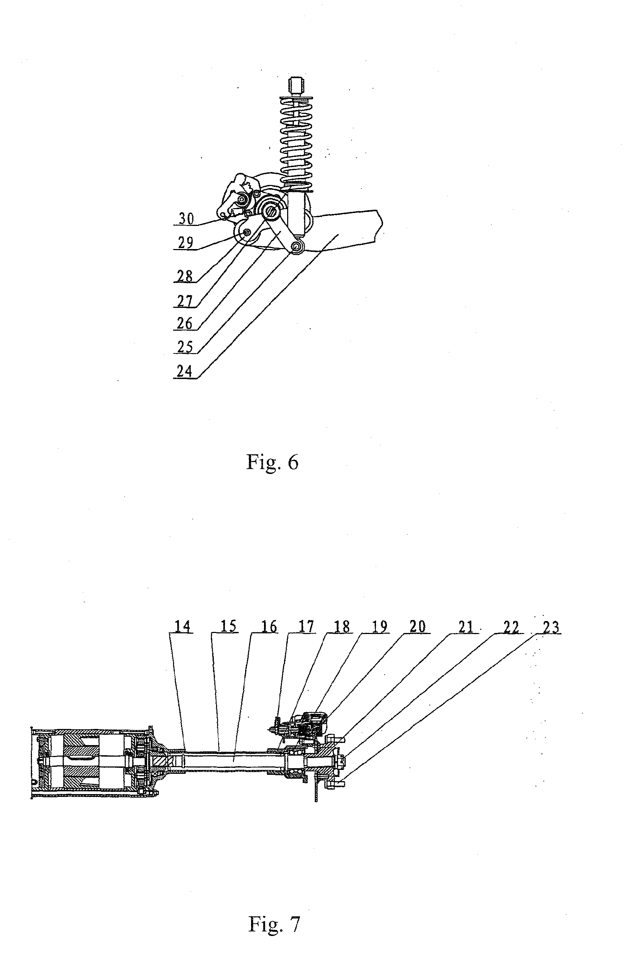

Figure 6 is a side view of Figure 5; and

Figure 7 is a partial sectional view of Figure 5.

Reference numerals in the figures:
- 1.: frame body;
- 3.: steering box;
- 5.: lower swing arm;
- 7.: front rim connecting flange;
- 9.: steering drive shaft;
- 11.: combined switch;
- 13.: front hub bearing;
- 15.: shaft sleeve;
- 17.: rear brake caliper;
- 19.: rear rim bearing;
- 21.: rear rim connecting flange;
- 23.: rim fastening screw;
- 25.: rear shock absorption fastening bolt;
- 27.: rear strut assembly;
- 29.: longitudinal swing arm fastening bolt;
- 31.: transverse thrust rod support;
- 33.: transverse thrust rod;
- 35: motor.

- 2.: front strut assembly;
- 4.: steering knuckle;
- 6.: front brake caliper;
- 8.: brake disc;
- 10.: steering column;
- 12.: steering wheel;
- 14.: transmission end cover;
- 16.: half shaft;
- 18.: shaft sleeve outer flange;
- 20.: rear brake disc;
- 22.: slotted nut;
- 24.: longitudinal swing arm;
- 26.: rear shock absorption support;
- 28.: longitudinal swing arm support;
- 30.: rear caliper fastening screw;
- 32.: transverse thrust rod fastening nut;
- 34.: transmission; and

### DETAILED DESCRIPTION

The present application will be further illustrated hereinafter in conjunction with the accompanying drawings.

As shown in figures, a rear-motor rear-drive chassis for an ultra-mini low-speed pure electric vehicle includes a frame body, a front axle and a rear axle being arranged at two ends of the frame body respectively, and wherein the rear axle is a driving axle.

Arrangement of the front axle is described as follow. A front strut assembly 2 of the front axle includes a shock absorber and an upper strut assembly, and the front strut assembly 2 is connected to the frame body 1 via the upper strut assembly. A lower end of the front strut assembly 2 is directly inserted into a mounting hole of a steering knuckle 4 made of aluminum alloy material and is fixed by a fastening bolt. A lower end of the steering knuckle 4 is connected to a lower swing arm 5 via a ball pin in taper fit. The lower swing arm 5 is an A-shaped lower swing arm. A knuckle arm of the steering knuckle 4 is also fixed to the steering box 3 via a taper pin, and an upper end of the steering knuckle 4 is fixedly provided with a front brake caliper 6. A front rim connecting flange 7 is supported in the steering knuckle 4 via a front hub bearing 13 arranged in the steering knuckle 4, an outer side of the front rim connecting flange 7 is provided with a slotted nut, and a rim and a front wheel are fixedly connected via screws arranged on the front rim connecting flange 7. An output shaft of the steering box 3 is connected to a steering drive shaft 9 via a spline, and then the steering drive shaft 9 is connected to a steering column 10. An upper end of the steering column 10 is provided with a combined switch 11 and a steering wheel 12. The steering column 10, the steering box 3 and the lower swing arm 5 are all fixed on the frame body 1 via fastening bolts.

Arrangement of the rear axle is described as follow. Two motors 35 are symmetrically arranged on the rear axle, and the two driving motors 35 and two transmissions 34 are bilaterally symmetrically arranged. An axle housing of the motors 35 and the transmissions 34 is provided, at each of two outer ends thereof, with a transmission end cover 14 having a size and a shape matched with the axle housing, and the axle housing and the transmission end covers 14 are fixedly connected by six screws at two sides to form an integrated driving axle body. An output shaft of each of the transmissions 34 is connected to an inner end of a half shaft 16 via a spline, an outer end of the half shaft 16 is connected to a rear rim connecting flange 21 via a spline, and the transmission 34 at each of the left and right sides drive the rear rim connecting flange 21 at each of the left and right sides respectively via the half shaft 16. The rear rim connecting flange 21 is fixedly provided with a rear brake disc 20 and is mounted with a rim and a rear wheel. A shaft sleeve 15 is surroundingly provided outside the half shaft 16, and an inner side of the shaft sleeve 15 is fixedly connected to the transmission end cover 14 arranged at the outer side of the transmission 34. The half shaft 16 is supported in a shaft sleeve outer flange 17 via a rear rim bearing 19, and the shaft sleeve outer flange 17 is fixedly provided with a rear brake caliper 17 via a rear caliper fastening screw 30. A rear strut assembly 27 includes a shock absorber, an upper lifting lug of the rear strut assembly 27 is connected to the frame body 1 via a bolt, and a lower lifting lug of the rear strut assembly 27 is fixed on a rear shock absorption support 26 via a rear shock absorption fastening bolt 25. A front lifting lug of a longitudinal swing arm 24 is connected to the frame body 1 via a bolt, and a rear lifting lug of the longitudinal swing arm 24 is fixed on a longitudinal swing arm support 28 via a longitudinal swing arm fastening bolt 29. One end of a transverse thrust rod 33 is fixed on a transverse thrust rod support 31, and the other end of the transverse thrust rod 33 is connected to the frame body 1 via a transverse thrust rod fastening nut 32 and a fastening bolt. The rear shock absorption support 26, the longitudinal swing arm support 28 and the transverse thrust rod support 31 are directly welded on the shaft sleeve 15.

The present application provides a two-motor rear-motor rear-drive arrangement solution. The front suspension in the solution adopts an improved MacPherson-type suspension, which includes the A-shaped lower swing arm replacing the longitudinal and transverse thrust rods, the steering knuckle made of aluminum alloy material, and the front strut assembly with an optimized dimensional design. The rear suspension adopts a trailing arm type, which includes the longitudinal swing arm made of aluminum alloy material, the transverse thrust rod, the rear axle housing having optimized dimension and an integrated spring shock absorber. The brake system adopts a four brake discs design. Due to its low curb weight and low speed, the ultra-mini pure electric car doesn't need a brake system used in conventional vehicles. The present application provides a brake system with a simpler structure, which includes a brake caliper made of aluminum alloy material, a friction plate with high friction coefficient and a brake disc with a reduced thickness. The steering system includes a steering box, a steering drive shaft, a steering column made of aluminum alloy material and a steering wheel having a small diameter. The controller is formed in a way by combing the hardware and software. The power transmission assembly adopts a form of two motors adding with a planetary reducer. In the rear-motor rear-drive arrangement, the power assembly is directly supported on the shaft sleeve by means of flange connection, and the power is directly transmitted to the tire via the half shaft.

## Claims

1. A rear-motor rear-drive chassis for an ultra-mini low-speed pure electric vehicle, comprising a frame body (1), and a front axle and a rear axle being arranged on the frame body, wherein both ends of the front axle are provided with a front wheel, the rear axle is a driving axle and is provided with two motors (35) arranged symmetrically, each of the two motors (35) has one end connected to each other and the other end provided with a transmission (34), and an output end of the transmission (34) is drivably connected to a rear wheel.

2. The rear-motor rear-drive chassis for an ultra-mini low-speed pure electric vehicle according to claim 1, wherein the front axle comprises a steering box (3), a tie rod of the steering box (3) is fixedly connected to a knuckle arm of a steering knuckle (4) via a taper pin, the steering knuckle (4) has an upper end insertedly connected with a front strut assembly (2) and a lower end fixedly connected to a lower swing arm (5) via a taper pin, the lower swing arm (5) is of an A-shaped structure and is connected to the frame body (1), an outer side of the steering knuckle (4) is connected to a front rim connecting flange (7) via a front hub bearing (13), and the front rim connecting flange (7) is fixedly connected with a brake disc (8).

3. The rear-motor rear-drive chassis for an ultra-mini low-speed pure electric vehicle according to claim 1, wherein an output shaft of the transmission (34) is connected to an inner end of a half shaft (16) via a spline, an outer end of the half shaft (16) is connected to a rear rim connecting flange (21) via a spline, and the rear rim connecting flange (21) is fixedly provided with a rear brake disc (20) and is mounted with a rim and a rear wheel.

4. The rear-motor rear-drive chassis for an ultra-mini low-speed pure electric vehicle according to claim 2, wherein an output end of the steering box (3) is connected to a steering drive shaft (9) and a steering column (10) in sequence via spines, an upper end of the steering column (10) is provided with a combined switch (11) and a steering wheel (12), and the steering column (10) and the steering box (3) are connected to the frame body (1) via fastening bolts.

5. The rear-motor rear-drive chassis for an ultra-mini low-speed pure electric vehicle according to claim 2, wherein the front strut assembly (2) has an upper end connected to the frame body (1) and a lower end insertedly connected to the steering knuckle (4) and fixed via a fastening bolt.

6. The rear-motor rear-drive chassis for an ultra-mini low-speed pure electric vehicle according to claim 2, wherein the steering knuckle (4) is made of aluminum alloy material.

7. The rear-motor rear-drive chassis for an ultra-mini low-speed pure electric vehicle according to claim 3, wherein outside the half shaft (16), a shaft sleeve (15) is surroundingly provided, an inner side of the shaft sleeve (15) is fixedly connected to a transmission end cover (14) arranged at an outer side of the transmission (34), an outer side of the shaft sleeve (15) is fixedly connected to a shaft sleeve outer flange (18), and the shaft sleeve outer flange (18) is fixedly provided with a rear brake caliper (17).

8. The rear-motor rear-drive chassis for an ultra-mini low-speed pure electric vehicle according to claim 7, wherein the shaft sleeve (15) is provided with a transverse thrust rod support (31), being connected to a transverse thrust rod (33) via a bolt, a rear shock absorption support (26), being connected to a rear strut assembly (27) via a bolt, and a longitudinal swing arm support (28), being connected to a longitudinal swing arm (24) via a bolt.

9. The rear-motor rear-drive chassis for an ultra-mini low-speed pure electric vehicle according to claim 7, wherein one end of the transverse thrust rod (33) is connected to the transverse thrust rod support (31), one end of the rear strut assembly (27) is connected to the rear shock absorption support (26), one end of the longitudinal swing arm (24) is connected to the longitudinal swing arm support (28), and the other end of each of the transverse thrust rod (33), the rear strut assembly (27) and the longitudinal swing arm (24) is connected to the frame body (1) via bolts.

10. The rear-motor rear-drive chassis for an ultra-mini low-speed pure electric vehicle according to claim 8, wherein the longitudinal swing arm (24) is made of aluminum alloy material.
